# EUROPEAN PATENT APPLICATION

(11) **EP 3 575 754 A1**
(43) Date of publication of application: **04.12.2019**
(21) Application number: 19171094.6
(22) Date of filing: 25.04.2019
(51) Int. Cl.: G01F 13/00, G01F 11/28, G01F 11/00

(54) **SYSTEM AND METHOD FOR METERING POWDERS**

(30) Priority: 01.06.2018 NL 2021042
(71) Applicant: Helmondse Internationale Levensmiddelen Holding B.V., 5705 CL Helmond (NL)
(72) Inventor: VAN ROIJ, Josephus Peter Hubertes Maria, 5705 CL HELMOND (NL); VAN DEN NIEUWELAAR, Erik, 5705 CL HELMOND (NL)
(74) Representative: Algemeen Octrooi- en Merkenbureau B.V.

(57) **Abstract**

System and method for metering powders. The system comprises storage containers comprising a container body with a filling hole as well as a cover that can be coupled to the container body, and conveying means for transporting at least the container bodies of the storage containers along a transport path. The transport path comprises a first part with a feed position at the upstream end of the first part, where during operation storage containers are fed to the conveying means, as well as a discharge position at the upstream end of the first part, where during operation container bodies are led away from the conveying means. The first part comprises a metering position between the feed position and the discharge position. The system further comprises a number of metering covers that can be coupled to a container body. Each metering cover is provided with a metering unit for the metered delivery, at the location of the metering position via a discharge opening of the metering cover, of powder from a container body with which the metering cover in question is coupled to a collecting container, operating means for operating metering units coupled to a container body at the location of the metering position, and exchanging means for the temporary replacement, in the part of the first part of the transport path located upstream of the metering position, of the cover of the storage container with a metering cover and for the replacement, in the part of the first part of the transport path located downstream of the metering position, of the metering cover with the cover of the storage container so that the filling hole of the storage container is closed again by the cover.

## Description

The present invention relates to a system for metering powders, in particular for metering powders intended for consumption such as spices or additives such as flavourings and preservatives. Systems of this kind are known, wherein metering takes place from storage containers with a single particular type of powder therein. The storage containers comprise a container body that is closed with a cover. Storage containers of this kind are stored in a warehouse that is suitable for example for storing several hundred storage containers with different powders. As soon as an order for a single powder or for a mixture of powders according to a certain recipe is received by the system, a storage container with the powder in question or a number of storage containers with the respective powders in question is fetched from the warehouse, for example with a fork-lift truck, and brought to a metering location. At the metering location, the covers are taken off the storage containers and a quantity of powder is taken out of the respective storage containers manually. The weight of this quantity is weighed and adjusted to the desired weight according to the order in question. The desired weight of powder is then deposited in a collecting container. As soon as a container body of the storage container is emptied of powder according to an order, it is closed with a cover again. The storage containers are then transported back to the warehouse and placed in storage positions thereof.

The application of such a system is time-consuming and error-prone. In addition, there is a real risk of cross-contamination because a cover after being removed from a storage container with a certain powder may by mistake be put on another storage container with a different powder.

Moreover, a system is described in the publication NL 1024944 that has a carousel with eight storage cylinders therein. On the underside, each storage cylinder is provided internally with a metering screw. By turning the carousel, a rod connected to the metering screw that extends through the storage cylinder in question to the top of the storage cylinder, can be manipulated into a position so that it can be grasped by a drive unit. Through excitation of the drive unit when it is in engagement with a rod, the metering screw connected to this rod can be rotated and a desired quantity of powder can thus be metered from the storage container in question onto a balance positioned under said storage container. Alternatively, six storage cylinders are described which, in a comparable manner to the storage cylinders according to the above variant, are arranged in a straight line and use is made of a drive unit that is movable along the row, for driving a metering screw of one of the six storage cylinders, as required. It is conceivable per se that a person skilled in the art would extend the systems described in NL 1024944 by increasing the number of storage cylinders to some extent but this comes up against technical and economic limitations. Thus, in any case it is not possible to obtain a useful system with which it is possible to meter powders from dozens, let alone more than a hundred storage containers.

The aim of the present invention, whether or not in an optional embodiment of a system according to the invention, is to provide a solution or at least improvement for the aforementioned limitations or drawbacks of the systems according to the prior art. For this purpose, the invention provides a system according to Claim 1. Thanks to the measures of the system according to the invention, powders can be metered from tens or even hundreds of storage containers, with a high degree of automation and moreover with little likelihood of errors. For this purpose, in the system according to the invention, the storage containers are transported temporarily along the first part of the transport path from the feed position to the discharge position. At the metering position of the first part of the transport path, powder can be metered automatically from a storage container, for which a cover belonging to the storage container upstream of the metering position is replaced by the exchanger unit with a metering cover, and this metering cover can be replaced again downstream of the metering location by the further exchanger unit with the original cover of the storage container. The metering cover, which is provided with a metering screw, may be utilized for accurate metering of powder from a storage container. By placing a metering cover only temporarily on the filling hole of a storage container, namely when metering powder from the storage container, it becomes superfluous to close every storage container permanently with a metering cover.

A higher degree of automation may be obtained if the conveying means are also arranged for transporting metering covers back to the exchanger unit from the further exchanger unit. Thus, it is also possible to guarantee that there is a continuous supply of metering covers to the exchanger unit or at least that there is always a metering cover available at the exchanger unit to replace a storage container cover temporarily without requiring the system to comprise a relatively large number of metering covers.

The risk of cross-contamination can be limited considerably if the system comprises a cleaning unit for cleaning metering covers including the associated metering unit, after a metering unit of a metering cover has been used for metering a powder.

In combination with the embodiment described above wherein the conveying means are also arranged for transporting metering covers from the further exchanger unit to the exchanger unit, the cleaning unit can clean the metering covers efficiently if the cleaning unit is arranged for cleaning the metering covers during the transporting of the metering covers by the conveying means from the further exchanger unit to the exchanger unit, along a second part of the transport path.

From the design standpoint it may be advantageous if the conveying means comprise a number of carrier units, each arranged for the temporary carrying of at least one container body. The container bodies may thus be transferred at the feed position to a carrier unit and at the discharge position be taken back from the carrier unit.

To ensure that the cover belonging to a container body also remains with the container body during transport of the container body along the first part of the transport path, so that it can be stated with greater certainty that the further exchanger unit closes the filling hole of the container body again with the same cover as the cover that was previously taken from that container body by the exchanger unit, it is advantageous if the carrier units are also arranged for carrying a cover when the cover is in a state uncoupled from the container body.

A further efficient use of the conveying means is possible if the carrier units are also arranged for carrying a metering cover when the metering cover is in a state uncoupled from a container body.

Within the context of endeavouring not to spill any powder during the temporary replacement by the exchanger unit of the cover of a storage container with a metering cover, it may be advantageous if the carrier units are connected, swivelling about a horizontal swivel axle, to a frame of the conveying means and the operating means are arranged, by swivelling the carrier units, after the exchanging means replace the cover of the storage container with a metering cover and before powder is metered from the storage container into the collecting container by means of the metering unit, for directing the discharge opening and, preferably also, the filling hole downwards, and for directing the filling hole upwards, by further swivelling, after powder is metered from the storage container into the collecting container by means of the metering unit and before the metering cover of the storage container is replaced with the cover by the exchanging means.

According to an embodiment that is favourable from the design standpoint, in top view the frame is at least essentially of a circular shape. This can be achieved for example if the carrier units are mounted in a carousel, wherein the transport path is also circular.

Generally speaking, the degree of automation can be increased if the conveying means are arranged for transporting the carrier units along an endless transport path.

The degree of automation can also be increased if the system also comprises feed transport means for feeding storage containers to the feed position and/or discharge transport means for discharging storage containers from the discharge position, in particular if the system further comprises an automated warehouse for storing storage containers in storage positions of the warehouse, said warehouse being arranged for automated feed of storage containers from storage positions to the feed transport means and/or for the automated feed of storage containers from the discharge transport means to storage positions. Human intervention can thus be reduced to a minimum, so that the possibility of errors can also be reduced.

An embodiment that is efficient from the design standpoint can be obtained if the operating means comprise a stationary operating unit at the location of the metering position, which is arranged for operating successive metering units. Thus, it is not necessary to provide each metering unit with its own control unit, which is, however, also a possibility per se within the context of the present invention. A control unit of this kind can then for example be supplied with energy from a battery with which the metering unit is provided and which is charged or replaced with some regularity. The control unit may then for example be operated via wireless communication with a central control system.

Efficient and accurate metering can take place if each metering unit comprises a screw that is caused to rotate by the operating means, for feed of powder to the discharge opening on rotation of the screw.

The present invention also relates to a method for metering powders, in particular for metering powders intended for consumption. More specifically the method comprises the steps of
A feeding a storage container with a container body with a powder therein and a cover coupled to the container body that closes a filling hole of the container body at a feed position of a transport path,
B after step A, replacing the cover of the storage container with a metering cover, said metering cover being provided with a discharge opening and a metering unit with a screw that extends to the side of the metering cover facing the container body,
C after step B, transporting the storage container to a discharge position of the transport path,
D during step C, at the location of a metering position in the transport path, operating the metering unit for metered delivery of powder from the container body via the discharge opening of the metering cover to a collecting container, wherein the screw rotates during said metering and feeds powder in the storage container to the discharge opening,
E after step D, replacing the metering cover with the cover of the storage container so that the filling hole of the storage container is closed again by the cover,
F after step E, discharging the storage container from the discharge position.

The advantages that can be achieved with a method of this kind as well as with possible more specific methods as defined in Claims 15 to 19, which are dependent on Claim 14, will be clear to the reader on the basis of the foregoing description of the system according to the invention, whether or not in particular embodiments thereof.

The invention is explained in more detail hereunder on the basis of on an embodiment of a system according to the invention, referring to the following figures:
Fig. 1a shows a schematic top view of an embodiment of a system according to the present invention;
Fig. 1b shows a perspective view of a portion of the system according to Fig. 1a;
Figs. 2a - 2j show a number of side views/cross-sections in the portion according to Fig. 1b of the system at successive time points during application of the system;
Fig. 3 shows a schematic perspective view of a portion of an operating unit in combination with a metering cover as used in the system;
Fig. 4a and 4b show cross-sections of the operating unit in combination with a metering cover according to Fig. 3.

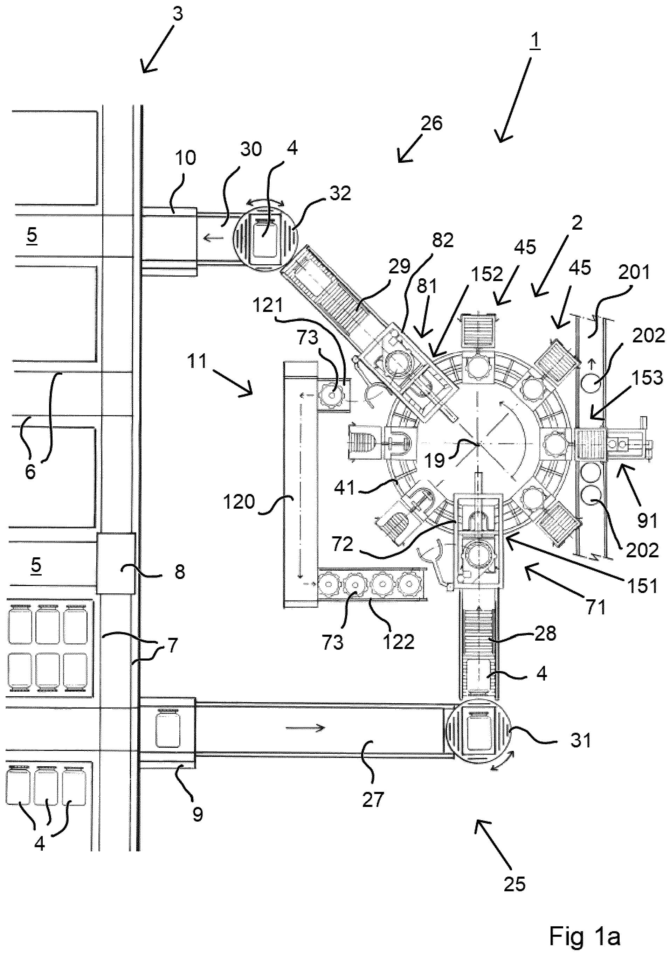

System 1 according to Fig. 1a comprises a metering device 2 and a warehouse 3. In warehouse 3, in respective storage positions thereof, there are storage containers 4, at least partly filled with a powder intended for consumption, such as a spice. Warehouse 3 comprises aisles 5, on both sides of which the storage positions are provided. On each floor of warehouse 3, rails 6 are provided in the aisles 5, which at one end of the respective aisles 5 are connected via a T-junction to rails 7, which extend transversely to rails 6. The warehouse 3 further comprises a number of shuttles 8 which can move along rails 6 and 7 and can optionally move from one floor of warehouse 3 to another floor, by means of a lift that is not shown in more detail. Each shuttle 8 is arranged to take a storage container 4 from a storage position automatically and then transfer it to the feed lift 9 or transfer a storage container 4 from discharge lift 10 and put it back in a storage position of the warehouse 3.

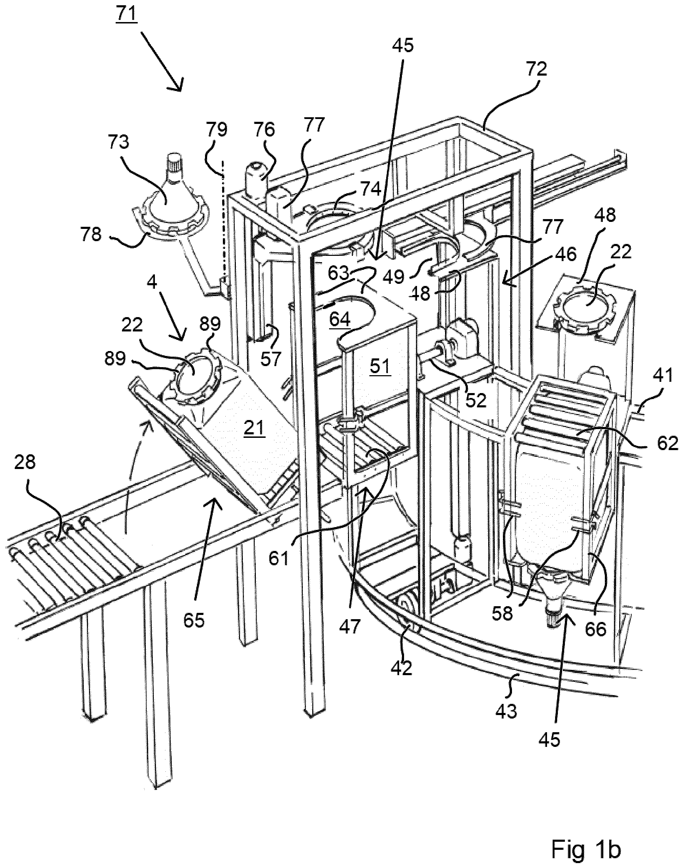

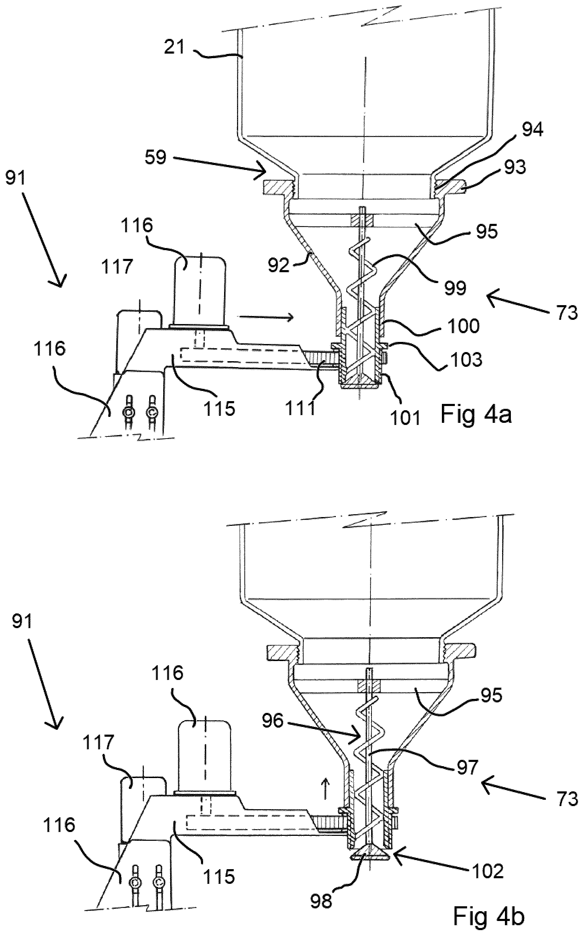

The storage containers 4 (see also Figs. 1b and 4a) comprise an at least essentially rectangular container body 21 with, at the top thereof, a filling hole in a neck 59 of the container body 21. The container body 21 is provided with a thread on the outside of this neck 59. The storage container 4 further comprises a screw cover 22 that is screwed onto said thread and, thus coupled to the container body 21, closes the filling hole of the container body 21 so that powder in the storage container 4 is confined therein. The screw cover 22 comprises teeth 89 on its perimeter, by which screw cover 22 can be gripped, as will become clearer hereunder.

System 1 further comprises feed transport means 25 for feeding storage containers 4 from the feed lift 9 of warehouse 3 to the metering device 2, as well as discharge transport means 26 for discharging storage containers 4 from metering device 2 to discharge lift 10 of warehouse 3. The feed transport means 25 as well as the discharge transport means 26 comprise a number of conveyors 27, 28 and 29, 30 as well as a turntable 31 between conveyors 27 and 28 and a turntable 32 between conveyors 29 and 30. By means of the turntables 31, 32, the storage containers 4 can be brought into an orientation that is suitable for further transport from the respective turntables 31, 32.

The metering device 2 (see in particular Figs. 1a and 1b) comprises a frame 41 of at least essentially cylindrical shape. Frame 41 rests on a number of runners 42 which in their turn rest on the bottom of a U-shaped guide profile 43. In top view, the guide profile 43 has a circular course, wherein the centre of the circular shape coincides with the centre of the cylindrical shape of frame 41. At least one of the runners 42 is driven by a drive motor 44, which is for example supplied with power via a sliding contact. With drive of the at least one runner 42, the runners 42 roll through the guide profile 43, rotating frame 41 about the vertical rotation axis 19, which coincides with the centre of the cylindrical shape of the frame 41.

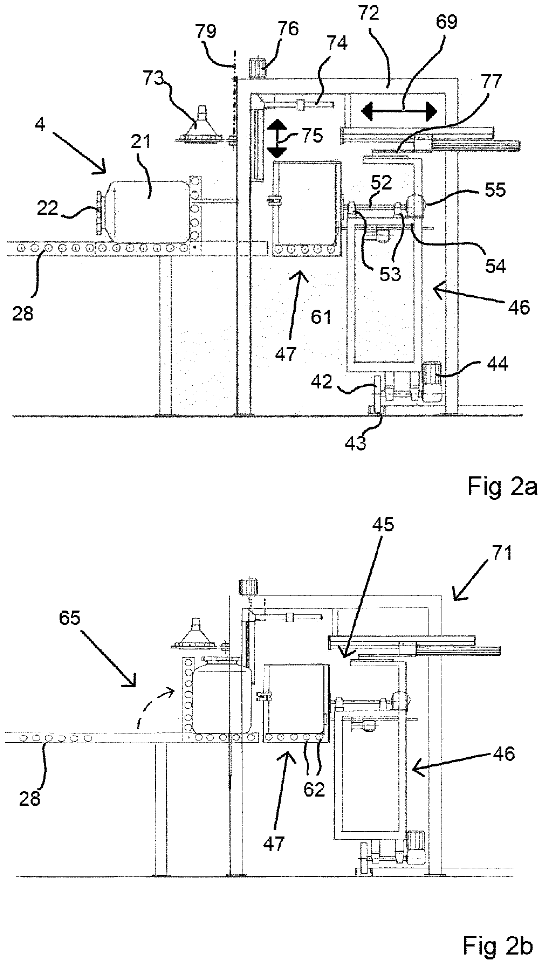

The metering device 2 further comprises eight carrier units 45 which, regularly spaced along the perimeter of the frame 41, are connected to the frame 41 and are transported along a circular transport path when the system 1 is in use. Each carrier unit 45 comprises a fixed part 46 and a rotating part 47. The fixed part 46 is connected rigidly to the frame 41 and comprises a supporting plate 48 with a recess 49 therein, with which the supporting plate 48 is arranged for temporarily carrying a screw cover 22. The rotating part 47 has a back plate 51 which is connected rigidly to axle housing 52, which is supported rotatably about the centre line thereof in bearings 53, which bear on plate 54 belonging to the fixed part 46 (see also Fig. 2a). On this plate 54, an electric motor 55 is also provided for rotating the axle housing 52 so that the rotating part 47 as a whole can be turned between a receiving position as shown in Fig. 1b for the left-hand carrier unit 45, and a metering position as shown in Fig. 1b for the right-hand metering unit 45.

The rotating part 47 comprises a bottom 61, which is formed by a number of rollers 62. The rotating part 47 further comprises a nesting plate 63 with a recess 64 where the neck 59 of a container body 21 just fits, wherein the cover 22 of a storage container 4 extends from above the nesting plate 63 directly after a storage container 4 is pushed from the conveyor 28 into the rotating part 47 whereas the storage container 4 rests with the bottom of the container body 21 thereof on the bottom 61 of rotating part 47. Rotating part 47 further comprises a pair of retaining fingers 58 which, by means of driving means not shown in more detail, swivel about respective posts 66, which extend between the bottom 61 and the nesting plate 63, between an open position (left-hand carrier unit 45 in Fig. 1b) and a retaining position (right-hand carrier unit 45 in Fig. 1b).

For placing a storage container 4 in a rotating part 47, conveyor 28 is provided with a tilting part 65, with which a storage container 4 can be tilted from a horizontal orientation, wherein the screw cover 22 is directed against the direction of transport, to a vertical orientation. For then moving the container body 4 from the tilting part 65 to a rotating part 47, pushing or pulling members are provided, which are not shown in more detail. Alternatively, for this purpose, rollers of the tilting part 65 could also be of driven design.

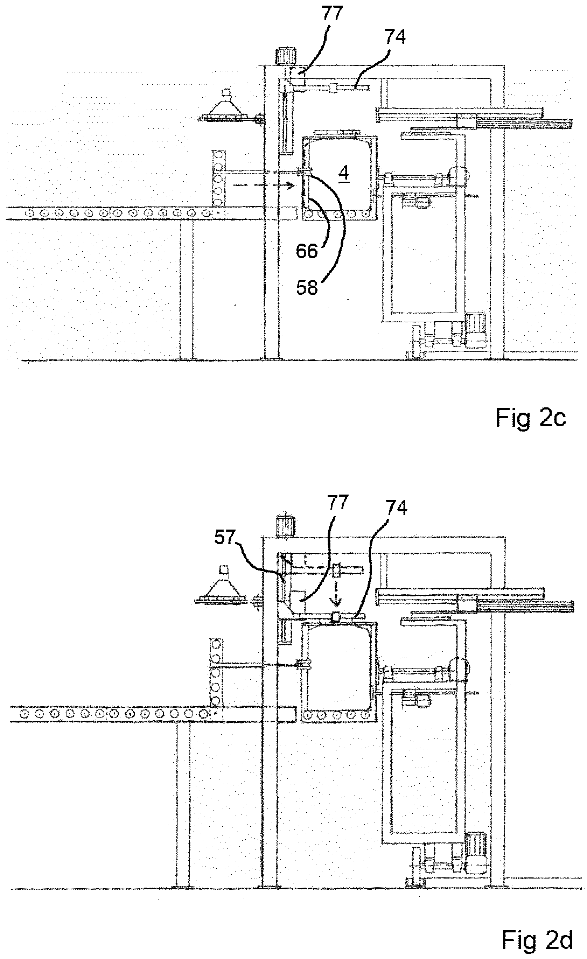

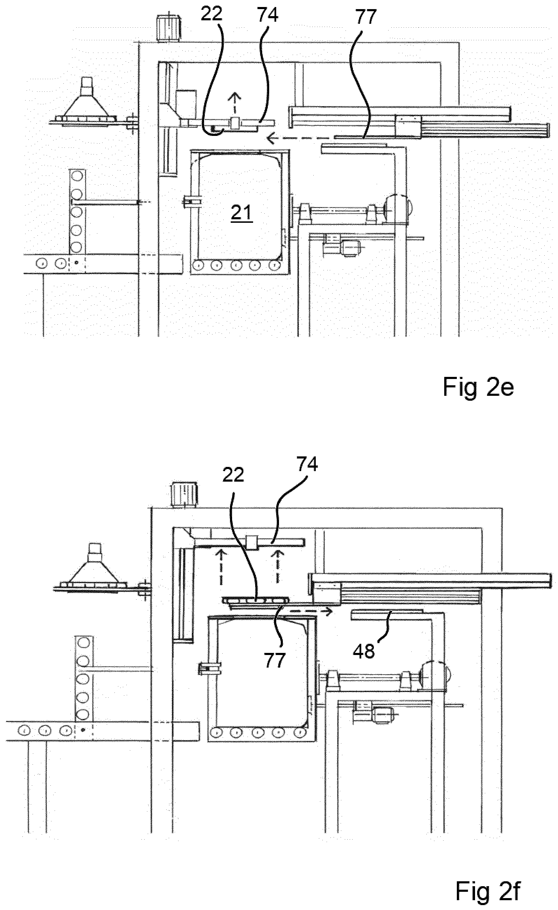

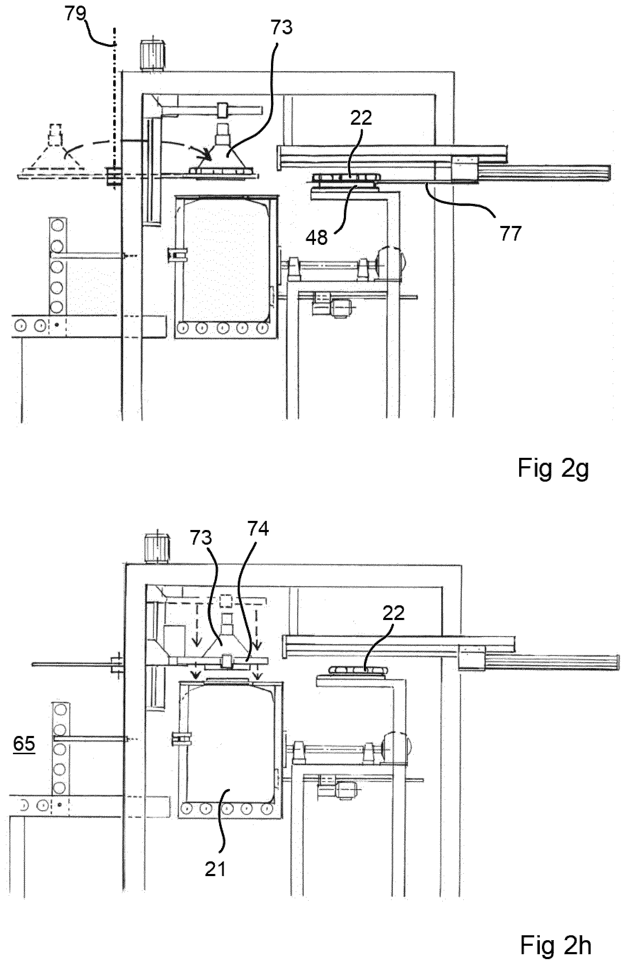

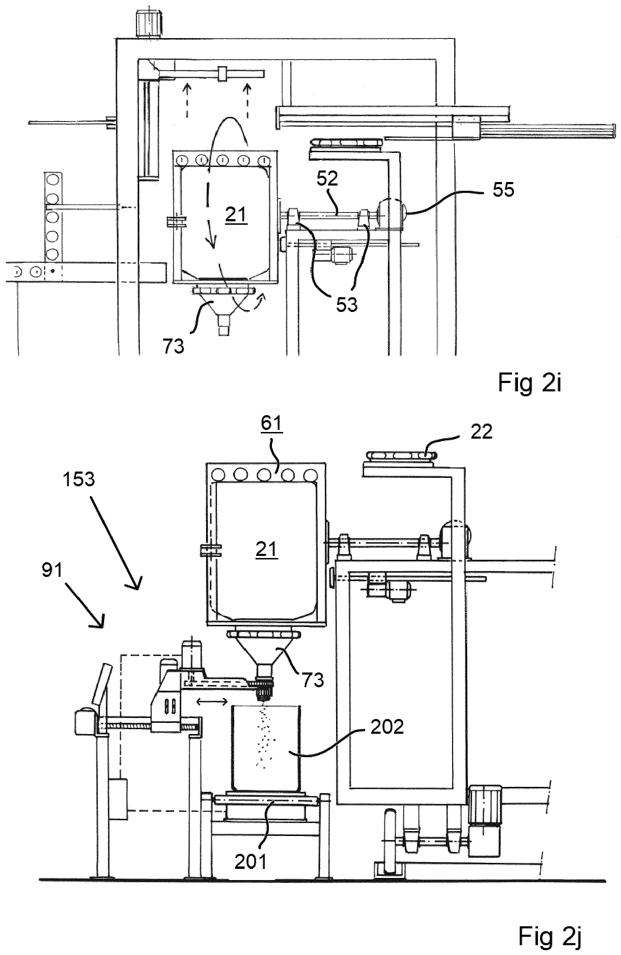

Metering device 2 further comprises an exchanger unit 71, as shown in particular in Fig. 2. This exchanger unit 71 is provided at the downstream end of conveyor 28, at the location of feed position 151, and comprises a portal-shaped frame 72 that extends over the frame 41 and leaves space for successive carrier units 45 to pass between the legs of frame 72. Exchanger unit 71 is provided for replacing the screw cover 22 of a storage container 4 present in rotating part 47 with a metering cover 73. For this purpose, exchanger unit 71 comprises a rotating member 74. The rotating member 74 comprises a rotatable ring with teeth that can engage with the teeth 89 on the perimeter of the screw cover 22. The rotating member 74 is movable up and down relative to frame 72 along guide 57 according to double-headed arrow 75, for which exchanger unit 71 is provided with a drive motor 76. The rotating member 74 is provided with drive motor 77 for turning the ring of rotating member 74.

Exchanger unit 77 further comprises a receiving fork 78, swivelling about a vertical swivel axle 79 relative to frame 72, and a receiving fork 77 movable to and fro in translation relative to frame 72, according to double-headed arrow 69.

Metering device 2 also comprises a further exchanger unit 81. This exchanger unit 81 is provided at the upstream end of conveyor 29 at the location of discharge position 152 and also comprises a portal-shaped frame 82 that extends over frame 41. The further exchanger unit 81 is constructed in a comparable manner to exchanger unit 71, as will also become clearer from the following. A more detailed description of exchanger unit 81 is consequently not necessary here for a good understanding of the invention.

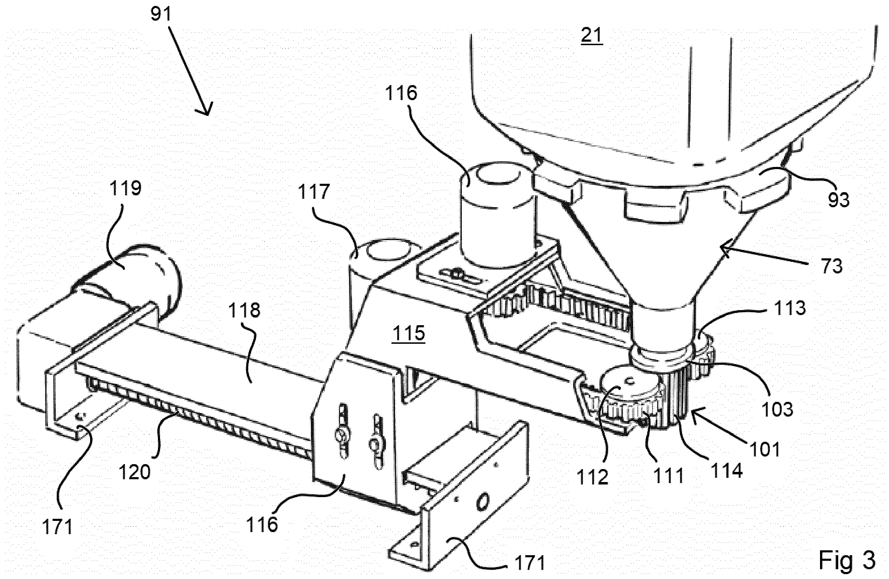

The metering device 2 also further comprises a metering unit 91 (Figs. 3, 4a and 4b). The metering unit 91 is provided along the path of the carrier units 45, more specifically of the rotating parts 47 thereof at the location of metering position 153. Before explaining the metering unit 91 further, first a more detailed description of the metering covers 73 is given hereunder, on the basis of Figs. 4a and 4b.

The metering cover 73 comprises a funnel-shaped part 92 which, in the orientation according to Figs. 4a and 4b, has at the top a ring-shaped gripping part 93 with an internal thread 94, with which metering cover 73 is screwed onto the neck 59 of the container body 21. On the inside of funnel-shaped part 92, the metering cover 73 is provided with a cross-member 95 as well as with a screw member 96. The screw member 96 comprises an axle housing 97 that extends perpendicularly on the cross-member 95 and of which an upper end is mounted rotatably in the centre of the cross-member 95. On the opposite lower end, a cap body 98 is connected to the axle housing 97. Around the axle housing 97, screw member 96 is provided with a concentric spiral-shaped metering body 99 that is connected rigidly to axle housing 97. The funnel-shaped body 92 is provided on the underside with a cylindrical discharge part 100, within which screw member 96 also extends. Within this cylindrical discharge part 100, a tubular closing body 101 is provided, movable both vertically up and down and rotatable therein. The metering body 99, in so far as it extends within the closing body 101, is connected rigidly to the closing body 101 and will consequently move together with the closing body 101, more specifically move up and down and rotate with it.

In the closed situation according to Fig. 4a, the underside of the closing body 101 rests on the cap body 98. Therefore powder that has flowed out of the container body 21 into the funnel-shaped body 92 and into the closing body 101 cannot flow out of the metering cover 73. This does become possible at the moment when the closing body 101 moves upwards relative to discharge part 100, so that a circumferential discharge opening 102 forms between the underside of the closing body 101 and the cap body 98 (Fig. 4b). For the upward motion of the closing body 101, the outside of the latter is provided with a collar 103, via which an upward force can be exerted on the closing body 101. The collar 103 also serves as a stop because the upward motion of closing body 101 is delimited on account of collar 103 coming up against the underside of the discharge part 100, as is shown in Fig. 4b.

The metering unit 91, as illustrated in Fig. 2j and Fig. 3 as well as in Figs. 4a and 4b, comprises a toothed belt 111, which goes round the rotating runners 112, 113 among others and its teeth are arranged to interact with teeth 114 that are provided on the outside of closing body 101 and, at least in the orientation according to Fig. 3, under collar 103. The rotating runners 112, 113, as well as other rotating runners around which toothed belt 111 is passed, are mounted on bearings relative to a sliding frame 115. On sliding frame 115, a drive motor 117 is provided for driving the toothed belt 111. The sliding frame 115 can slide vertically up and down with respect to the further sliding frame 116 by means of drive motor 117. The further sliding frame 116 in its turn, of course together with sliding frame 115, can slide back and forth in the horizontal direction along guide 118 by means of drive motor 119 and spindle 120. Guide 118 is rigidly connected to the fixed surroundings by means of brackets 171 and a frame that is not shown in detail.

The system 1 further comprises a washing device 11. Washing device 11 has a washing section 120 for washing metering covers 73 therein. For feeding metering covers 73, a feed conveyor 121 is provided at the upstream end of washing section 120. For the discharge of metering covers 73 washed in washing section 120, a discharge conveyor 122 is provided at the downstream end of washing section 120.

In the washing section 120, spray nozzles for water and/or cleaning fluids, not shown in detail, are provided, which ensure that during passage of the metering covers 73 through the washing section 120, all powder residues that remained in the metering covers 73 during metering of powder as described above, are removed. It is thus possible to guarantee that the metering covers 73 on the discharge conveyor 122 are totally clean and should not in any case cause cross-contamination when these metering covers 73 are screwed onto a subsequent container body 21 with another powder. For the movement of the metering covers 73 through the washing section 120, the latter is provided with conveying means, not shown in detail, for example a wire-mesh belt conveyor.

The operation of system 1, as presented above, will be described in more detail hereunder.

By means of shuttles 8, feed lift 9 and feed transport means 25, storage containers 4 are fed from warehouse 3 to the tilting part 65 on the downstream end of conveyor 28 (Fig. 2a). Tilting part 65 tilts the storage container 4 from a horizontal to a vertical orientation (Fig. 2b). Then the storage container 4 is moved into the rotating part 47, wherein the storage container 4 comes to rest on bottom 61, and neck 59 of container body 21 is positioned in recess 64 (Fig. 2c). Then retaining fingers 58 swivel towards each other so that the storage container 4 is confined in the rotating part 47. Then rotating member 74 moves down along the guide 57 until the teeth of the ring of rotating member 74 engage with the teeth 89 of screw cover 22 (Fig. 2d). On energizing electric motor 77, screw cover 22 is unscrewed from container body 21. Rotating member 74 then moves upwards somewhat along guide 57 together with the unscrewed screw cover 22. Meanwhile, screw cover 22 rests on fingers, not shown in detail, of the rotating member, which are moved radially inwards. Then receiving fork 77 slides out in the direction of the screw cover 22 so that receiving fork 77 is positioned just beneath screw cover 22. Screw cover 22 is then released by rotating member 74 through movement of the aforementioned fingers radially outwards so that screw cover 22 comes to rest on the receiving fork 77. Then rotating member 74 continues to move upwards (Figs. 2e and 2f) and the receiving fork 77 is pulled back completely. Receiving fork 77 is also pulled back, and during this translation the screw cover 22 is received by supporting plate 48. Then receiving fork 78, which supports a metering cover 73, swivels about swivel axle 79, from the position that is shown in Fig. 1b to a position in which the metering cover 73 becomes positioned above the filling hole of container body 21 and is thus positioned directly beneath rotating member 74 (Fig. 2g). Rotating member 74 then moves downward again along guide 57 until the teeth of the ring of rotating member 74 engage with the teeth that are provided on the outside of the gripping part 93 of the metering cover 73, after which, on energizing electric motor 77, the metering cover 73 on the container body 21 is rotated (Fig. 2h). Rotating member 74 then moves back up again. Meanwhile, tilting part 65 is also tilted back again.

Next, at least one of the runners 42 is driven by means of electric motor 44 so that the cylindrical frame 41 rotates through 45° about shaft 101. Thus, the rotating part 47 of the next carrier unit 45 becomes available for a subsequent storage container 4 that is fed to the exchanger unit 71. The container body 21 on which, as described above, the metering cover 73 is screwed is then turned upside down by suitably energizing electric motor 45 so that the metering cover 73 is positioned on the underside of the associated container body 21 and the closing body 101 of metering cover 73 is directed downwards (Fig. 2i).

Next, the metering device 2 rotates again through 45° so that the carrier unit 45 reaches metering position 153, where metering unit 91 is provided. By energizing electric motor 190, the sliding body 115 and the further sliding body 116 are moved in the direction of the metering cover 73 until toothed belt 111 engages on teeth 114 on the outside of closing body 101 (Fig. 4a). By energizing electric motor 117, sliding body 115 is pushed upwards relative to sliding frame 116, wherein the tops of the rotating runners 112, 113 come up against collar 103 and then collar 103 comes up against the underside of the discharge part 100. Thus, discharge opening 102 is formed (Fig. 4b), i.e. it is opened. Then toothed belt 111 is driven by energizing electric motor 116 so that the screw member 96 is rotated about the centre line of axle housing 97 and metered powder from the container body 21 flows via discharge opening 102 out of the container body 21 and drops into a collecting container 202 provided under the metering cover 73 on conveyor 201 (Fig. 2j). By means of load cells, not shown in detail, it is possible to weigh how much weight flows out of the container body 21 and/or the weight increase of the collecting container 202. A control system controls the electric motor 116 on the basis of the measurements from these load cells. As soon as a desired quantity of powder has been metered, this control system stops the electric motor 116, and then by suitably energizing electric motor 117, the sliding frame 115 is pulled back again so that the closing body 101 comes to rest again on the cap body 98, so that discharge opening 102 is closed. Then electric motor 119 is energized to pull back the sliding frame 115 together with the further sliding frame 116 so that the metering device 73 can turn further in steps of 45° until the carrier unit 45 reaches the discharge position 152.

In place of conveyor 201, it would also be possible to use driverless vehicles which carry a collecting container and transport it to the metering position 153. Especially in combination with this, system 1 could also be configured with a number of metering positions 153 between the feed position 151 and the discharge position 152 to increase the capacity. A metering unit 91 would then be provided at each metering position 153.

Instead of the discharge position 152, the further exchanger unit 81 ensures that the metering cover 73 is replaced again with the screw cover 22, which is transported together with the container body 21 from the feed position 151 to the discharge position 152. During the process of replacing the metering cover 73 with the screw cover 22, the receiving fork 121 belonging to the further exchanger unit 81 transfers the metering cover 73 to the feed conveyor 121 of the washing device 11. After the further exchanger unit 81 has screwed the same screw cover 22 back onto the container body 21, which at the location of exchanger unit 71 was unscrewed from the container body, the further exchanger unit 81 transfers the storage container 4 to the discharge transport means 26, which then transfers the storage container back to the warehouse 3 so that the storage container 4 can be brought by means of a shuttle 4 back to a storage position thereof.

After transfer to the feed conveyor 121, the metering cover 73 is washed in the washing section 120, wherein all powder, or at least almost all powder, is removed from the metering cover 73, after which the washed metering covers 73 on the discharge conveyor 122 can be transferred to the receiving fork 78 of the exchanger unit 71.

## Claims

1. System (1) for metering powders, comprising storage containers (4) for storing powders, said storage containers comprising a container body (21) with a filling hole for filling the container body with a powder via the filling hole, as well as a cover (22) that can be coupled to the container body for closing the filling hole, conveying means (2) for transporting at least the container bodies of the storage containers along a transport path, said transport path comprising a first part of the transport path with a feed position (151) at the upstream end of the first part of the transport path, where during operation storage containers are fed to the conveying means as well as a discharge position (152) at the upstream end of the first part of the transport path where during operation container bodies are led away from the conveying means, wherein the first part of the transport path comprises a metering position (153) between the feed position and the discharge position, the system further comprising a number of metering covers (73) that can be coupled to a container body for closing the filling hole, each metering cover being provided with a metering unit (96) for the metered delivery of powder, at the location of the metering position via a discharge opening (102) of the metering cover from a container body to which the metering cover in question is coupled, to a collecting container (202), operating means (91) for operating, at the location of the metering position, metering units coupled to a container body, exchanging means (71, 81) for the temporary replacement of the cover of the storage container with a metering cover, in the part of the first part of the transport path located upstream of the metering position, and for the replacement, in the part of the first part of the transport path located downstream of the metering position, of the metering cover with the cover of the storage container so that the filling hole of the storage container is closed again by the cover.

2. System according to Claim 1, wherein the conveying means are also arranged for transporting metering covers back to the exchanger unit from the further exchanger unit.

3. System according to Claim 1, comprising a cleaning unit for cleaning metering covers including the associated metering unit, after a metering unit of a metering cover is used for metering a powder.

4. System according to Claims 2 and 3, wherein the cleaning unit is arranged for cleaning the metering covers during transport thereof by the conveying means back along a second part of the transport path.

5. System according to one of the preceding claims, wherein the conveying means comprise a number of carrier units, each arranged for carrying at least one container body.

6. System according to Claim 5, wherein the carrier units are also arranged for carrying a cover when the cover is in a state uncoupled from the container body.

7. System according to Claims 5 or 6, wherein the carrier units are also arranged for carrying a metering cover when the metering cover is in a state uncoupled from a container body.

8. System according to Claims 5, 6 or 7, wherein the carrier units are connected, swivelling about a horizontal swivel axle, to a frame of the conveying means and the operating means are arranged so that by swivelling the carrier units, after the exchanging means have replaced the cover of the storage container with a metering cover and before the metering unit has metered powder from the storage container into the collecting container, the discharge opening and, preferably also, the filling hole are directed downwards, and directing the filling hole upwards by further swivelling, after powder has been metered from the storage container into the collecting container by means of the metering unit and before the metering cover of the storage container is replaced with the cover by the exchanging means.

9. System according to one of Claims 5 to 8, wherein the conveying means are arranged for transporting the carrier units along an endless transport path.

10. System according to one of the preceding claims, wherein the system also comprises feed transport means for feeding storage containers to the feed position and/or discharge transport means for discharging storage containers from the discharge position.

11. System according to Claim 10, wherein the system comprises an automated warehouse for storing storage containers in storage positions of the warehouse, said warehouse being arranged for the automated feed of storage containers from storage positions to the feed transport means and/or for the automated feed of storage containers from the discharge transport means to storage positions.

12. System according to one of the preceding claims, wherein the operating means comprise a stationary operating unit (50) at the location of the metering position (14) which is arranged for operating successive metering units.

13. Method for the automated metering of powders, comprising the steps of
A feeding a storage container with a container body with a powder therein and a cover coupled to the container body that closes a filling hole of the container body to a feed position of a transport path,
B after step A, replacing the cover of the storage container with a metering cover, said metering cover being provided with a discharge opening and a metering unit with a screw that extends to the side of the metering cover facing the container body,
C after step B, transporting the storage container to a discharge position of the transport path,
D during step C, at the location of a metering position in the transport path, operating the metering unit for metered delivery of powder from the container body via the discharge opening of the metering cover to a collecting container wherein the screw rotates during said metering and feeds powder in the storage container to the discharge opening,
E after step D, replacing the metering cover with the cover of the storage container so that the filling hole of the storage container is closed again by the cover,
F after step E, discharging the storage container from the discharge position.

14. Method according to Claim 13, wherein after step E the metering cover is transported back to the location where during step B the metering cover replaced a cover, so that the metering cover can replace a cover belonging to a subsequent storage container.

15. Method according to Claim 13 or 14, wherein after step E the metering cover and the associated metering unit are cleaned.
